# EUROPÄISCHE PATENTSCHRIFT

(11) **EP 3 928 418 B1**
(45) Veröffentlichungstag und Bekanntmachung des Hinweises auf die Patenterteilung: **08.10.2025**
(21) Anmeldenummer: 20704523.8
(22) Anmeldetag: 10.02.2020
(51) Int. Cl.: H02K 5/20, H02K 9/19

(54) **KÜHLMITTELLEITELEMENT, KÜHLSYSTEM UND ELEKTRISCHE MASCHINE**
COOLANT CONDUCTING ELEMENT, COOLING SYSTEM AND ELECTRICAL MACHINE
ÉLÉMENT DE GUIDAGE DE FLUIDE DE REFROIDISSEMENT, SYSTÈME DE REFROIDISSEMENT ET MACHINE ÉLECTRIQUE

(30) Priorität: 19.02.2019 DE 102019202253
(43) Veröffentlichungstag der Anmeldung: 29.12.2021
(73) Patentinhaber: VOLKSWAGEN AKTIENGESELLSCHAFT, 38440 Wolfsburg (DE)
(72) Erfinder: LOHR, Thomas, 34314 Espenau (DE); GORGES, Sebastian, 59964 Medebach-Dreislar (DE)
(86) Internationale Anmeldenummer: PCT/EP2020/053318
(87) Internationale Veröffentlichungsnummer: WO 2020/169391

(56) Entgegenhaltungen:
- DE-A1- 1 501 498
- DE-A1- 102011 056 838
- US-A- 2 625 804
- US-A- 3 127 530
- US-A- 4 535 604
- US-A- 4 573 329

## Beschreibung

Die Erfindung betrifft ein Kühlmittelleitelement für ein Kühlsystem zur Kühlung einer elektrischen Maschine. Weiter betrifft die Erfindung ein entsprechendes Kühlsystem sowie eine elektrische Maschine.

Eine elektrische Maschine weist häufig einen Stator auf, welcher sich im Betrieb erwärmt. Um ein Überhitzen des Stators und damit der elektrischen Maschine verhindern zu können, weist die elektrische Maschine ein Kühlsystem auf, über welches eine Kühlung des Stators und damit der elektrischen Maschine erfolgen kann. Zur Führung eines Kühlmittels entlang einer Kühllaufbahn des Kühlsystems ist ein Kühlmittelleitelement vorgesehen. Es ist wünschenswert, dass durch einen durch das Kühlmittelleitelement definierten Spalt zum Durchströmen des Kühlmittels zwischen dem Kühlmittelleitelement und der Kühllaufbahn eine homogene Strömung entlang der Kühllaufbahn erreicht werden kann.

Zur Herstellung ist es bekannt, das Kühlmittelleitelement, welches üblicherweise eine Ringform aufweist, zu gießen oder zwei Teile miteinander durch eine Schweißverbindung zu verbinden. Derartige Kühlmittelleitelemente weisen jedoch hohe Fertigungstoleranzen auf, wodurch die Größe des ausgebildeten Spalts zum Durchströmen des Kühlmittels stark variieren kann, wodurch auch die Kühlwirkung stark schwanken kann. Zudem ermöglichen diese Bauweisen keinen Toleranzausgleich der Statortoleranzen.

Aus der US 3,127,530 A ist ein Kühlsystem für motorgetriebene Pumpen bekannt. Aus der DE 10 2011 056838 A1 ist eine Kühlvorrichtung für ein Nebenaggregat einer Brennkraftmaschine bekannt, vorzugsweise für ein elektrisches Nebenaggregat, mit einem doppelwandigen Kühlgehäuse, das mit einem Kühlkreislauf verbunden ist, in dem eine Kühlflüssigkeit strömt, wobei das Kühlgehäuse einen Zulaufanschluss und einen Rücklaufanschluss aufweist, wobei das doppelwandige Kühlgehäuse aus einem ersten Kühlabschnitt und einem zweiten Kühlabschnitt gebildet ist, die miteinander verbindbar und derart ausgebildet sind, dass diese mindestens an einer Außenwand des Nebenaggregats anliegen.

Aus der DE 15 01 498 A1 ist ein Wärmeaustauscher bekannt, insbesondere eine steife, federnde Wärmeaustauschplatte, die um Behälter verschiedener Abmessungen herumgespannt wird, wodurch deren Inhalt erhitzt oder gekühlt wird.

Aus der US 4 573 329 A ist eine Maschine zur Herstellung von Speiseeis und ähnlichen kalten Produkten bekannt, die einen Gefrierbehälter aufweist, der in eine im Wesentlichen zylindrische Kühlkammer eingesetzt und aus dieser herausgenommen werden kann. Die Kammer ist elastisch verformbar und hat einen kreisförmigen Querschnitt, der durch das Vorhandensein eines Durchgangs nicht vollständig in sich geschlossen ist. Der Durchgang ist durch ein Paar Abschirmungen und durch einen im Wesentlichen faltenbalgartigen Teil aus elastisch nachgiebigem und wärmeisolierendem Material verschlossen. Auf diese Weise wird ein besserer thermischer Wirkungsgrad der Maschine erreicht.

Aus der US 2,625,804 A ist die Kühlung und der Ausschank von Getränken, insbesondere von Bier und ähnlichem Gebräu bekannt und bezieht sich insbesondere auf eine Vorrichtung und ein Verfahren zur Kühlung von Gebräu, das in Metallfässern abgefüllt ist.

Aus der US 4 535 604 A ist eine Speiseeis-Maschine mit einem Speiseeis-Behälter bekannt, mit einer im Wesentlichen zylindrischen Kühlkammer mit im Wesentlichen zylindrischen Kühlraum mit kreisförmigem Querschnitt, der nicht vollständig in sich geschlossen ist aufgrund des Vorhandenseins eines Schlitzes, der sich entlang einer Mantelfläche des Zylinders erstreckt.

Der Erfindung liegt die Aufgabe zugrunde, ein Kühlmittelleitelement, ein Kühlsystem sowie eine elektrische Maschine zur Verfügung zu stellen, bei welchen ein möglichst definierter Strömungsspalt ausgebildet werden kann.

Die Lösung der erfindungsgemäßen Aufgabe erfolgt mit den Merkmalen der unabhängigen Ansprüche. Bevorzugte Ausgestaltungen und Weiterbildungen der Erfindung sind in den abhängigen Ansprüchen angegeben.

Das Kühlmittelleitelement gemäß der Erfindung weist einen Grundkörper auf, an welchem an einer nach radial innen zeigenden Umfangsfläche des Grundkörpers mindestens ein Führungselement zur Führung eines Kühlmittels angeordnet ist, wobei der Grundkörper einen ersten Endabschnitt und einen zweiten Endabschnitt aufweist, wobei in einem verbundenen Zustand des ersten Endabschnitts mit dem zweiten Endabschnitt der Grundkörper eine Ringform ausbildet. Ferner weist das Kühlmittelleitelement gemäß der Erfindung ein Verspannelement auf, welches sich in einem an dem Grundkörper befestigten Zustand entlang einer nach radial außen zeigenden Umfangsfläche des Grundkörpers erstreckt und derart an dem Grundkörper befestigt ist, dass der erste Endabschnitt und der zweite Endabschnitt zueinander verspannt gehalten sind.

Erfindungsgemäß ist es nunmehr nicht mehr vorgesehen, dass das Kühlmittelleitelement starr ausgebildet ist, sondern das Kühlmittelleitelement weist in einem verbauten Zustand, bei welchem das Kühlmittelleitelement in der elektrischen Maschine angeordnet ist, eine definierte Flexibilität auf, so dass Fertigungstoleranzen von dem Kühlmittelleitelement ausgeglichen werden können und damit ein definierter und konstanter Spalt zum Durchströmen des Kühlmittels zwischen dem Kühlmittelleitelement und einer Kühllaufbahn ausgebildet werden kann. Das Kühlmittelleitelement weist dafür einen Grundkörper auf, welcher vorzugsweise einen axial ausgebildeten Schlitz aufweist, wobei durch den axial ausgebildeten Schlitz der Grundkörper einen ersten Endabschnitt und einen zweiten Endabschnitt aufweist, wobei die beiden Endabschnitte miteinander verbunden werden, so dass der Grundkörper in einem verbunden Zustand und damit auch in dem in dem elektrischen Gerät verbauten Zustand eine Ringform aufweist. Die beiden Endabschnitte werden erfindungsgemäß derart miteinander verbunden, dass sie im verbundenen Zustand federnd verspannt verbunden sind. Hierdurch weist der Grundkörper und damit das Kühlmittelleitelement eine Federwirkung auf, wodurch im verbauten Zustand des Kühlmittelleitelements über die Verbindung der beiden Endabschnitte miteinander ein federnder Toleranzausgleich ausgebildet werden kann. Durch die federnde Verspannung der beiden Endabschnitte miteinander kann sichergestellt werden, dass im verbauten Zustand die Führungselemente zur Führung des Kühlmittels an der Kühllaufbahn des Kühlsystems anliegen und dadurch ein definiert konstanter Strömungsspalt ausgebildet werden kann. Die Führungselemente bilden vorzugsweise gleichzeitig Distanzelemente bzw. Abstandselemente aus, so dass das Kühlmittelleitelement in einem definierten Abstand zu der Kühllaufbahn gehalten werden kann und damit der Spalt bzw. der Strömungsspalt zum Durchströmen des Kühlmittels gebildet werden kann. Die federnde Verspannung der beiden Endabschnitte wird erfindungsgemäß dadurch erreicht, dass das Kühlmittelleitelement zusätzlich zu dem Grundkörper ein Verspannelement aufweist, wobei das Verspannelement damit vorzugsweise ein separat zu dem Grundkörper ausgebildetes Bauteil des Kühlmittelleitelements ausbildet. Zum Verspannen der beiden Endabschnitte des Grundkörpers miteinander wird das Verspannelement an dem Grundkörper, insbesondere an einer nach radial außen zeigenden Umfangsfläche des Grundkörpers, vorzugsweise lösbar befestigt, so dass sich das Verspannelement im befestigten Zustand entlang der nach radial außen zeigenden Umfangsfläche des Grundkörpers erstreckt. Durch das verspannte Halten der beiden Endabschnitte des Grundkörpers zueinander mittels des Verspannelements kann die Ausbildung eines konstanten, möglichst kleinen Spalts bzw. Strömungsspalts zum Durchströmen des Kühlmittels gewährleistet werden, wobei der Spalt konstant groß unabhängig von geometrischen und auch physikalischen Toleranzen, wie beispielsweise Temperatureinflüssen, mittels des Verspannelements gehalten werden kann.

Um die Ausbildung eines konstanten Spaltes bzw. Strömungsspaltes unter verschiedenen geometrischen und physikalischen Einflüssen sicher gewährleisten zu können, kann das Verspannelement bevorzugt aus einem federnden und/oder elastischen Material ausgebildet sein. Durch die Ausbildung des Verspannelements aus einem federnden und/oder elastischen Material kann dieses eine definierte Flexibilität mit gleichzeitiger Rückstellwirkung aufweisen, um Toleranzen definiert ausgleichen zu können. Als federndes Material kann beispielsweise ein Federstahl oder Federdraht verwendet sein. Als elastisches Material kann beispielsweise ein Gummimaterial bzw. Kautschukmaterial und/oder ein elastisches Kunststoffmaterial verwendet sein. Das Material des Verspannelements weist vorzugsweise eine hohe Medienverträglichkeit, insbesondere eine hohe Medienverträglichkeit gegenüber dem Kühlmittel, und eine hohe Dehnbarkeit auf.

Erfindungsgemäß ist das Verspannelement derart ausgebildet, dass es sich im befestigten Zustand, d. h., wenn das Verspannelement an dem Grundkörper befestigt ist, über mehr als ein Drittel der nach radial außen zeigenden Umfangsfläche des Grundkörpers erstreckt. Erstreckt sich das Verspannelement über mehr als ein Drittel der nach radial außen zeigenden Umfangsfläche des Grundkörpers, können die durch das Verspannelement zu kompensierenden Toleranzen auf eine relativ große Länge des Verspannelements verteilt werden. Durch die Verteilung über eine relativ große Länge sind bei dem Verspannelement selbst relativ kleine Dehnungen notwendig, um zu jedem Zeitpunkt eine ausreichend große Vorspannung zum Halten der beiden Endabschnitte des Grundkörpers gewährleisten zu können. Das Verspannelement weist damit vorzugweise eine längliche Ausgestaltung auf. Bevorzugt erstreckt sich das Verspannelement über circa die Hälfte der nach radial außen zeigenden Umfangsfläche des Grundkörpers.

Zum Befestigen des Verspannelements an dem Grundkörper sind an der nach radial außen zeigenden Umfangsfläche des Grundkörpers erfindungsgemäß ein erstes Befestigungselement und ein zweites Befestigungselement an dem Grundkörper angeordnet. Die beiden Befestigungselemente sind vorzugsweise einstückig an dem Grundkörper ausgebildet. Bevorzugt sind die beiden Befestigungselemente derart ausgebildet, dass das Verspannelement lösbar an dem Grundkörper befestigt werden kann, so dass das Verspannelement im Bedarfsfall ausgetauscht werden kann. Bevorzugt sind die beiden Befestigungselemente baugleich zueinander ausgebildet. Es ist jedoch auch möglich, dass die beiden Befestigungselemente unterschiedliche Formen und Ausgestaltungen aufweisen.

Um eine besonders funktionssichere Positionierung des Verspannelements an dem Grundkörper erreichen zu können, ist das erste Befestigungselement erfindungsgemäß gegenüberliegend zu dem zweiten Befestigungselement angeordnet. Die beiden Befestigungselemente sind damit vorzugsweise in einem 180°-Winkel zueinander an dem Grundkörper angeordnet. Bei einer Positionierung der beiden Befestigungselemente gegenüberliegend zueinander kann sich das Verspannelement circa über die Hälfte der nach radial außen zeigenden Umfangsfläche des Grundkörpers erstrecken.

In einer zur Erfindung nicht gehörenden Ausführung ist möglich, dass die beiden Befestigungselemente nicht gegenüberliegend zueinander angeordnet sind, beispielsweise wenn dies der zur Verfügung stehende Bauraum erfordert, dass diese in einem Winkel kleiner oder größer 180° zueinander an dem Grundkörper angeordnet sind.

Erfindungsgemäß ist, dass das erste Befestigungselement und/oder das zweite Befestigungselement hakenförmig ausgebildet sind. Bei einer hakenförmigen Ausbildung kann das Verspannelement in einfacher und schneller Art und Weise an dem oder den Befestigungselementen eingehakt werden, um an dem Grundkörper befestigt zu werden. Auch ein schnelles Lösen des Verspannelements von den Befestigungselementen ist dann möglich. Andere Ausgestaltungen von einem oder beiden Befestigungselementen sind ebenfalls möglich. Beispielsweise kann das erste Befestigungselement und/oder das zweite Befestigungselement in Form einer Öse ausgebildet sein, durch welche das Verspannelement zum Befestigen hindurchgeführt ist.

Das Verspannelement ist in einer ersten erfindungsgemäßen Alternative in Form eines Gummirings ausgebildet. Als Gummiring kann beispielsweise ein O-Ring verwendet werden. Der Gummiring kann dann beispielsweise so an dem Grundkörper befestigt sein, dass er im Bereich seiner Befestigung an dem Grundkörper zwei 180°-Biegungen ausbildet, so dass der Gummiring sich in der Art einer doppelt geführten Schnur entlang der nach radial außen zeigenden Umfangsfläche des Grundkörpers erstreckt. Ist das Verspannelement in Form eines Gummirings ausgebildet, ist das Verspannelement vorzugweise aus einem elastischen Kunststoffmaterial ausgebildet. Durch die Ausbildung des Verspannelements in Form eines Gummirings kann dieses zudem ein sehr geringes Gewicht aufweisen.

In einer zweiten erfindungsgemäßen Alternative ist vorgesehen, dass das Verspannelement in Form eines Federblechs oder in Form eines Federdrahts ausgebildet ist. Das Verspannelement ist dann vorzugsweise aus einem Metallmaterial ausgebildet. Sowohl bei der Ausbildung des Verspannelements in Form eines Federblechs oder in Form eines Federdrahts weist dieses vorzugsweise eine sehr geringe Dicke, vorzugsweise eine Dicke von weniger als 10 mm auf, so dass auch hier das Verspannelement ein geringes Gewicht bei einer gleichzeitig hohen Stabilität und einer guten Federwirkung aufweisen kann. Das Verspannelement ist bei der Ausbildung in Form eines Federblechs oder in Form eines Federdrahts vorzugsweise derart gebogen ausgebildet, dass es in seiner Form an die ringförmige Außenkontur des Grundkörpers angepasst ist.

Bei der Verwendung eines Federdrahts als Verspannelement ist das Verspannelement erfindungsgemäß als Spiralfeder ausgebildet. Das Verspannelement kann hier entlang seiner Länge mehrere Windungen aufweisen, wodurch das Verspannelement eine besonders gute Federwirkung aufweisen kann.

Die Erfindung sieht ferner ein Kühlsystem zur Kühlung einer elektrischen Maschine vor, welches eine Einlassöffnung zur Zuführung eines Kühlmittels, eine Auslassöffnung zur Abführung eines Kühlmittels, und eine Kühllaufbahn, entlang welcher während eines Kühlvorgangs aus der Einlassöffnung austretendes Kühlmittel fließt und entlang welcher während des Kühlvorgangs das Kühlmittel zu der Auslassöffnung fließt, aufweist, wobei an der Kühllaufbahn ein erfindungsgemäßes Kühlmittelleitelement ausgebildet ist, welches wie vorstehend beschrieben aus- und weitergebildet sein kann, wobei zwischen der Kühllaufbahn und dem Kühlmittelleitelement ein Spalt ausgebildet ist, durch welchen das Kühlmittel während des Kühlvorgangs von der Einlassöffnung zu der Auslassöffnung fließt.

Das Kühlmittelleitelement kann die Kühllaufbahn radial überdecken bzw. umspannen, so dass das Kühlmittel kontrolliert zwischen der Kühllaufbahn und dem Kühlmittelleitelement geführt werden kann. Zwischen dem Kühlmittelleitelement und der Kühllaufbahn kann dann ein Spalt zum Durchströmen des Kühlmittels ausgebildet sein. Die Kühllaufbahn kann beispielsweise ein Kühlmantel sein, welcher ein Gehäuse beispielsweise eines Stators einer elektrischen Maschine umgeben kann.

Die Lösung der erfindungsgemäßen Aufgabe erfolgt ferner mittels einer elektrischen Maschine, welche ein Gehäuse aufweist, wobei an einer Außenumfangsfläche ein Kühlsystem angeordnet ist, welches wie vorstehend beschrieben aus- und weitergebildet sein kann. Die elektrische Maschine kann ferner ein weiteres Gehäuse aufweisen, welches das Kühlsystem und damit auch das Kühlmittelleitelement radial umschließt.

Die elektrische Maschine kann beispielsweise als ein Elektromotor eines Kraftfahrzeugs ausgebildet sein.

Weitere, die Erfindung verbessernde Maßnahmen werden nachstehend anhand der Beschreibung bevorzugter Ausgestaltungen der Erfindung anhand der nachfolgenden Figuren näher dargestellt.

Es zeigen:
- Fig. 1: eine schematische Darstellung eines Kühlmittelleitelements gemäß der Erfindung,
- Fig. 2: eine schematische Darstellung eines Ausschnitts des in Fig. 1 gezeigten Kühlmittelleitelements im Bereich der Befestigung des Verspannelements an dem Grundkörper,
- Fig. 3: eine schematische Draufsicht auf eine Seite des in Fig. 1 gezeigten Kühlmittelleitelements,
- Fig. 4: eine schematische Darstellung eines Kühlmittelleitelements gemäß einer weiteren Ausgestaltung der Erfindung,
- Fig. 5: eine schematische Darstellung eines Kühlmittelleitelements gemäß einer weiteren Ausgestaltung der Erfindung,
- Fig. 6: eine Schnittdarstellung eines Teils einer elektrischen Maschine mit einem Kühlsystem und einem entlang der in Fig. 1 eingezeichneten Linie A-A geschnittenen Kühlmittelleitelement,
- Fig. 7: eine schematische Detaildarstellung der in Fig. 6 gezeigten Schnittdarstellung, und
- Fig. 8: eine schematische Detaildarstellung eines Übergangsbereichs zwischen den beiden Endabschnitten des Grundkörpers des in Fig. 1 gezeigten Kühlmittelleitelements.

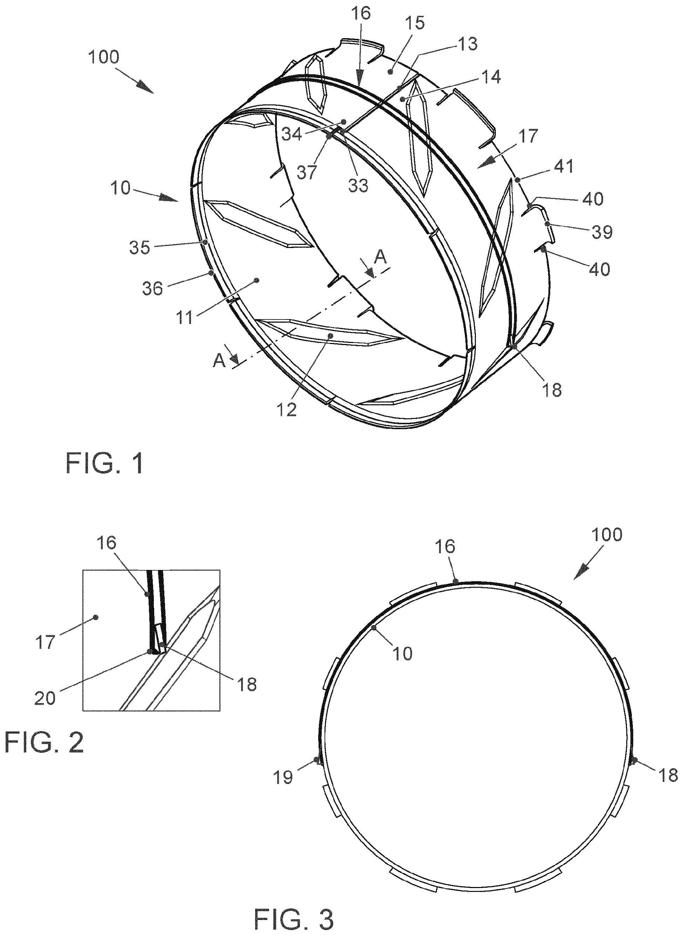

Fig. 1 zeigt ein Kühlmittelleitelement 100, welches in einer elektrischen Maschine 400 angeordnet werden kann.

Das Kühlmittelleitelement 100 weist einen Grundkörper 10 auf, welcher an seiner nach radial innen zeigenden Umfangsfläche 11 mehrere Führungselemente 12 zur Führung eines Kühlmittels aufweist. Die Führungselemente 12 sind jeweils in Form von Rippen ausgebildet, welche von einer nach radial innen zeigenden Umfangsfläche 11 des Grundkörpers 10 vorstehen. Die in Form von Rippen ausgebildeten Führungselemente 12 sind hier durch Prägung des Grundkörpers 10 ausgebildet, so dass die Führungselemente 12 aus dem Grundkörper 10 heraus ausgebildet sind.

Der Grundkörper 10 weist einen axial verlaufenden Schlitz 13 auf, so dass der Grundkörper 10 zwei sich gegenüberliegende Endabschnitte 14, 15 aufweist. In einem verbundenen Zustand der beiden Endabschnitte 14, 15 miteinander weist der Grundkörper 10 eine Ringform auf, wie in Fig. 1 zu erkennen ist. Die beiden Endabschnitte 14, 15 sind im verbundenen Zustand verspannt zueinander gehalten.

Zur Ausbildung der Verspannung ist ein Verspannelement 16 vorgesehen, welches als zu dem Grundkörper 10 separates Bauteil ausgebildet ist. Das Verspannelement 16 ist im befestigten Zustand derart an dem Grundkörper 10 befestigt, dass der erste Endabschnitt 14 und der zweite Endabschnitt 15 des Grundkörpers 10 mittels des Verspannelements 16 zueinander verspannt gehalten werden. Das Verspannelement 16 erstreckt sich im befestigten Zustand entlang einer nach radial außen zeigenden Umfangsfläche 17 des Grundkörpers 10. Das Verspannelement 16 umgreift damit den Grundkörper 10 zumindest über eine Teillänge des Grundkörpers 10.

Wie in Fig. 1 zu erkennen ist, erstreckt sich das Verspannelement 16 im befestigten Zustand über mehr als ein Drittel der nach radial außen zeigenden Umfangsfläche 17 des Grundkörpers 10, so dass eine durch das Verspannelement 16 aufgebrachte Federwirkung über eine möglichst große Länge des Verspannelements 16 verteilt werden kann, so dass bereits durch kleine Dehnungen des Verspannelements 16 eine ausreichend große Vorspannung auf den Grundkörper 10 mittels des Verspannelements 16 aufgebracht werden kann und ein hoher Toleranzausgleich möglich ist. Wie in der in Fig. 3 dargestellten Seitenansicht des in Fig. 1 gezeigten Kühlmittelleitelements 100 gezeigt ist, erstreckt sich das Verspannelement 16 über circa die Hälfte der nach radial außen zeigenden Umfangsfläche 17 des Grundkörpers 10. Es ist aber auch möglich, dass sich das Verspannelement 16 bei Bedarf um mehr oder weniger als die Hälfte der nach radial außen zeigenden Umfangsfläche 17 des Grundkörpers 10 erstrecken kann.

Das Verspannelement 16 ist hier lösbar an dem Grundkörper 10 befestigt. Für die Befestigung sind an dem Grundkörper 10 ein erstes Befestigungselement 18 und ein zweites Befestigungselement 19 angeordnet, wobei das Verspannelement 16 an dem ersten Befestigungselement 18 und an dem zweiten Befestigungselement 19 im befestigten Zustand befestigt ist. Die beiden Befestigungselemente 18, 19 sind an der nach radial außen zeigenden Umfangsfläche 17 des Grundkörpers 10 angeordnet. Die beiden Befestigungselemente 18, 19 sind derart ausgebildet und an dem Grundkörper 10 angeordnet, dass sie jeweils von der nach radial außen zeigenden Umfangsfläche 17 des Grundkörpers 10 hervorstehen.

Bei der in Fig. 1 gezeigten Ausgestaltung sind die Befestigungselemente 18, 19 beide hakenförmig ausgebildet, so dass das Verspannelement 16 im befestigten Zustand an den Befestigungselementen 18, 19 eingehakt sein kann, wie auch in Fig. 2 zu erkennen ist.

Wie ferner in Fig. 1 und 3 zu erkennen ist, sind die beiden Befestigungselemente 18, 19 gegenüberliegend zueinander angeordnet, so dass sie in einem 180°-Winkel zueinander an dem Grundkörper 10 angeordnet sind.

Bei der in Fig. 1 bis 3 gezeigten Ausgestaltung ist das Verspannelement 16 in Form eines Gummirings ausgebildet. Als Gummiring kann beispielsweise ein O-Ring verwendet werden. Das als Gummiring ausgebildete Verspannelement 16 ist hier derart an dem Grundkörper 10 befestigt, dass es im Bereich seiner Befestigung an dem Grundkörper 10 zwei 180°-Biegungen ausbildet, so dass sich das als Gummiring ausgebildete Verspannelement 16 in der Art einer doppelt geführten Schnur entlang der nach radial außen zeigenden Umfangsfläche 17 des Grundkörpers 10 erstreckt. Im Bereich der beiden 180°-Biegungen bildet das als Gummiring ausgebildete Verspannelement 16 jeweils eine Art Schlaufe 20 aus, welche jeweils an einem der beiden Befestigungselemente 18, 19 hinterhaken können.

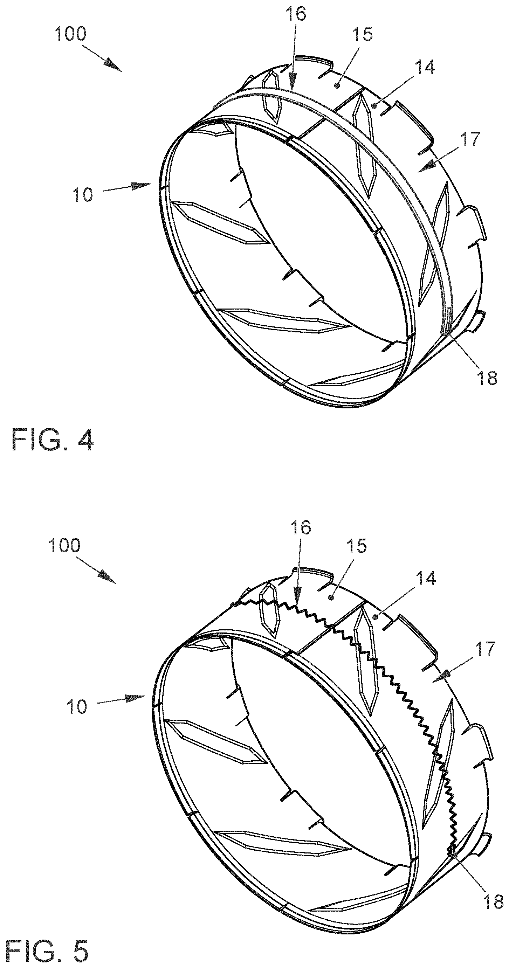

Bei der in Fig. 4 gezeigten Ausgestaltung ist das Verspannelement 16 in Form eines Federblechs ausgebildet. Das Federblech und damit das Verspannelement 16 ist dabei derart gebogen, dass es mit seiner Form an den Radius des Grundkörpers 10 angepasst ist. Das als Federblech ausgebildete Verspannelement 16 weist eine möglichst geringe Dicke auf, um eine gute Federwirkung erreichen zu können.

Bei der in Fig. 5 gezeigten Ausgestaltung ist das Verspannelement 16 in Form eines Federdrahts ausgebildet, wobei der Federdraht hier als Spiralfeder geformt ist. Das als Federdraht bzw. Spiralfeder ausgebildete Verspannelement 16 weist entlang seiner Länge eine Vielzahl von Windungen auf, über welche eine gute Federwirkung über die Länge des Verspannelements 16 erreicht werden kann.

Das als Federblech oder Federdraht ausgebildete Verspannelement 16 kann an seinen beiden Enden ebenfalls jeweils eine Schlaufe oder einen Haken aufweisen, um das Verspannelement an den Befestigungselementen 18, 19 des Grundkörpers 10 zu befestigen.

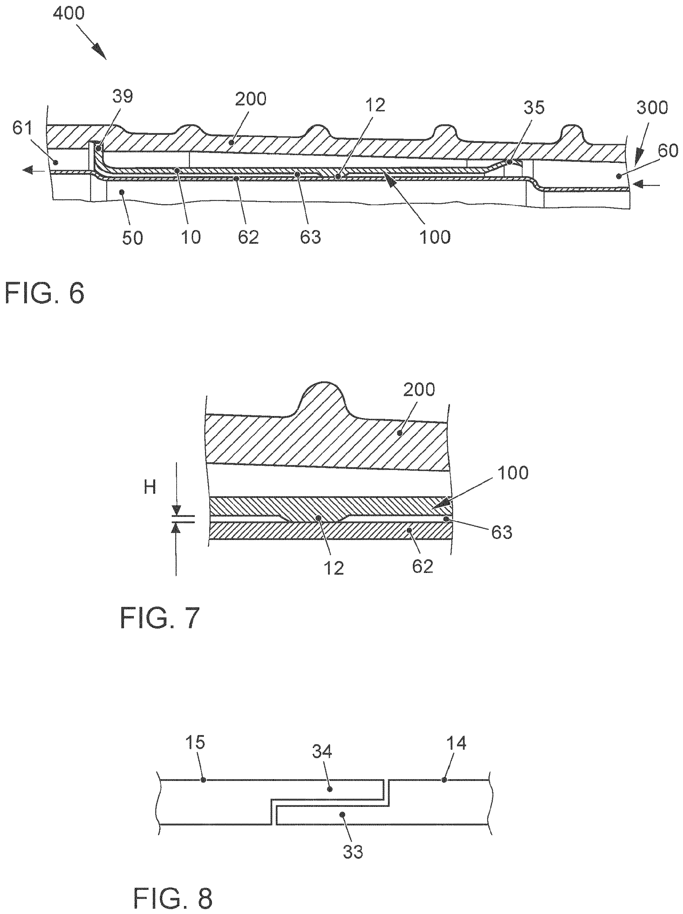

Um ein dichtes Anliegen der beiden Endabschnitte 14, 15 des Grundkörpers 10 aneinander erreichen zu können, können der erste Endabschnitt 14 eine erste Dichtfläche 33 und der zweite Endabschnitt 15 eine zweite Dichtfläche 34 aufweisen, wobei die beiden Dichtflächen 33, 34 zusammen eine Labyrinthdichtung ausbilden können, wie in Fig. 1 und 8 zu erkennen ist. Die erste Dichtfläche 33 kann in Form einer von dem ersten Endabschnitt 14 vorstehenden Kantenfläche ausgebildet sein, und die zweite Dichtfläche 34 kann in Form einer von dem zweiten Endabschnitt 15 vorstehenden Kantenfläche ausgebildet sein, wobei im verbundenen Zustand der beiden Endabschnitte 14, 15 miteinander die zweite Dichtfläche 34 flächig auf der ersten Dichtfläche 33 aufliegen kann.

Der hier gezeigte Grundkörper 10 weist ferner eine federnd ausgebildete Abdichtung 35 auf, welche mit einem das Kühlmittelleitelement 100 in einem verbauten Zustand umgebenden Gehäuse 200 zusammenwirken kann, wie in Fig. 6 zu erkennen ist. Die federnde Abdichtung 35 steht in Richtung des umgebenden Gehäuses 200 hervor, so dass sie mit dem Gehäuse 200 zusammenwirken kann, ohne die restliche Funktion des Kühlmittelleitelements 100 zu beeinflussen. Die federnde Abdichtung 35 ist an einem umlaufenden Rand 36 des Grundkörpers 10 ausgebildet, so dass auch die federnde Abdichtung 35 umlaufend an dem Grundkörper 10 ausgebildet ist.

Im Bereich der Abdichtung 35 bzw. des Randes 36 weist der Grundkörper 10 einen Entlüftungsspalt 37 auf, welcher im Bereich der Verbindung der beiden Endabschnitte 14, 15 miteinander angeordnet ist, wie beispielsweise in Fig. 1 zu erkennen ist.

Ferner sind an dem Grundkörper 10 umlaufend nach radial außen gerichtete Befestigungshaken 39 ausgebildet, welche im verbauten Zustand in das Gehäuse 200 einhaken, wie in Fig. 6 zu erkennen ist, um das Kühlmittelleitelement 100 gegen ein axiales und radiales Verschieben zu sichern. Die Befestigungshaken 39 sind federnd an dem Grundkörper 10 ausgebildet, indem im Bereich der Anbindung der Befestigungshaken 39 an dem Grundkörper 10 Schlitze 40 in dem Grundkörper 10 ausgebildet sind. Die Befestigungshaken 39 sind an dem Rand 36 gegenüberliegenden Rand 41 des Grundkörpers 10 ausgebildet.

Fig. 6 zeigt eine Schnittdarstellung eines Teils einer elektrischen Maschine 400 mit einem Kühlsystem 300 und einem entlang der in Fig. 1 eingezeichneten Linie A-A geschnittenen Kühlmittelleitelement 100. Das Kühlsystem 300 ist radial außen und umlaufend um ein Gehäuse 50 der elektrischen Maschine 400 angeordnet, wobei das Gehäuse 50 beispielsweise ein Gehäuse 50 eines Stators sein kann.

Das Kühlsystem 300 weist eine Einlassöffnung 60 zur Zuführung eines Kühlmittels und eine Auslassöffnung 61 zur Abführung des erwärmten Kühlmittels auf. Das Kühlsystem 300 weist ferner eine Kühllaufbahn 62 auf, entlang welcher während eines Kühlvorgangs aus der Einlassöffnung 60 austretendes Kühlmittel fließt und entlang welcher während des Kühlvorgangs das Kühlmittel zu der Auslassöffnung 61 fließt, wie mit den Pfeilen angedeutet ist. Die Kühllaufbahn 62 ist radial innen von dem Kühlmittelleitelement 100 angeordnet, so dass zwischen der Kühllaufbahn 62 und dem Kühlmittelleitelement ein Spalt 63 ausgebildet ist, durch welchen das Kühlmittel fließt. Die Führungselemente 12 des Kühlmittelleitelements 100 liegen flächig auf der Kühllaufbahn 62 auf, so dass durch die Höhe der Führungselemente 12 eine definierte Höhe H des Spalts 63 ausgebildet wird, wie in Fig. 7 gezeigt ist, wobei die Höhe H des Spalts 63 über den gesamten Umfang des Kühlmittelleitelements 100 konstant bleibt.

Die Erfindung beschränkt sich in ihrer Ausführung auf den in den Ansprüchen definierten Gegenstand.

### Bezugszeichenliste

- 100: Kühlmittelleitelement
- 200: Gehäuse
- 300: Kühlsystem
- 400: Elektrische Maschine
- 10: Grundkörper
- 11: Umfangsfläche
- 12: Führungselement
- 13: Schlitz
- 14: Erster Endabschnitt
- 15: Zweiter Endabschnitt
- 16: Verspannelement
- 17: Umfangsfläche
- 18: Erstes Befestigungselement
- 19: Zweites Befestigungselement
- 20: Schlaufe
- 33: Erste Dichtfläche
- 34: Zweite Dichtfläche
- 35: Abdichtung
- 36: Rand
- 37: Entlüftungsspalt
- 39: Befestigungshaken
- 40: Schlitz
- 41: Rand
- 50: Gehäuse
- 60: Einlassöffnung
- 61: Auslassöffnung
- 62: Kühllaufbahn
- 63: Spalt

- H: Höhe

## Patentansprüche

1. Kühlmittelleitelement (100) für ein Kühlsystem (300) zur Kühlung einer elektrischen Maschine (400),
mit einem Grundkörper (10), an welchem an einer nach radial innen zeigenden Umfangsfläche (11) des Grundkörpers (10) mindestens ein Führungselement (12) zur Führung eines Kühlmittels angeordnet ist, wobei der Grundkörper (10) einen ersten Endabschnitt (14) und einen zweiten Endabschnitt (15) aufweist, wobei in einem verbundenen Zustand des ersten Endabschnitts (14) mit dem zweiten Endabschnitt (15) der Grundkörper (10) eine Ringform ausbildet, und
mit einem Verspannelement (16), welches sich in einem an dem Grundkörper (10) befestigten Zustand entlang einer nach radial außen zeigenden Umfangsfläche (17) des Grundkörpers (10) erstreckt und derart an dem Grundkörper (10) befestigt ist, dass der erste Endabschnitt (14) und der zweite Endabschnitt (15) zueinander verspannt gehalten sind, wobei sich das Verspannelement (16) im befestigten Zustand über mehr als ein Drittel der nach radial außen zeigenden Umfangsfläche (17) des Grundkörpers (10) erstreckt, wobei an der nach radial außen zeigenden Umfangsfläche (17) des Grundkörpers (10) ein erstes Befestigungselement (18) und ein zweites Befestigungselement (19) zum Befestigen des Verspannelements (16) an dem Grundkörper (10) angeordnet sind, wobei das erste Befestigungselement (18) gegenüberliegend zu dem zweiten Befestigungselement (19) angeordnet ist, wobei das erste Befestigungselement (18) und/oder das zweite Befestigungselement (19) hakenförmig oder das erste Befestigungselement (18) und/oder das zweite Befestigungselement (19) in Form einer Öse ausgebildet sind, wobei das Verspannelement (16) in Form eines Gummirings ausgebildet ist, dass das Verspannelement (16) in Form eines Federblechs oder in Form eines Federdrahts ausgebildet ist, oder dass ein als Federdraht ausgebildetes Verspannelement (16) als Spiralfeder ausgebildet ist.

2. Kühlmittelleitelement (100) nach Anspruch 1, **dadurch gekennzeichnet, dass** das Verspannelement (16) aus einem federnden und/oder elastischen Material ausgebildet ist.

3. Kühlsystem (300) zur Kühlung einer elektrischen Maschine (400), mit einer Einlassöffnung (60) zur Zuführung eines Kühlmittels,
einer Auslassöffnung (61) zur Abführung des Kühlmittels,
einer Kühllaufbahn (62), entlang welcher während eines Kühlvorgangs aus der Einlassöffnung (60) austretendes Kühlmittel fließt und entlang welcher während des Kühlvorgangs das Kühlmittel zu der Auslassöffnung (61) fließt,
wobei an der Kühllaufbahn (62) ein Kühlmittelleitelement (100) angeordnet ist, welches nach einem der Ansprüche 1 oder 2 ausgebildet ist, wobei zwischen der Kühllaufbahn (62) und dem Kühlmittelleitelement (100) ein Spalt (63) ausgebildet ist, durch welchen das Kühlmittel während des Kühlvorgangs von der Einlassöffnung (60) zu der Auslassöffnung (61) fließt.

4. Elektrische Maschine (400), mit einem Gehäuse (50), wobei an einer Außenumfangsfläche des Gehäuses (50) ein Kühlsystem (300) angeordnet ist, welches nach Anspruch 3 ausgebildet ist.

5. Elektrische Maschine (400) nach Anspruch 4, wobei die elektrische Maschine (400) als ein Elektromotor eines Kraftfahrzeugs ausgebildet ist.

## Claims

1. Coolant conducting element (100) for a cooling system (300) for cooling an electrical machine (400), comprising a base body (10), on which at least one guide element (12) for guiding a coolant is arranged on a radially inwardly facing circumferential surface (11) of the base body (10), wherein the base body (10) has a first end portion (14) and a second end portion (15), wherein the base body (10) forms a ring shape when the first end portion (14) is connected to the second end portion (15), and comprising a bracing element (16) which, when fixed to the base body (10), extends along a radially outwardly facing circumferential surface (17) of the base body (10) and is fixed to the base body (10) in such a way that the first end portion (14) and the second end portion (15) are held together in a braced manner, wherein the bracing element (16), in the fixed state, extends over more than one third of the radially outwardly facing circumferential surface (17) of the base body (10), wherein a first fixing element (18) and a second fixing element (19) for fixing the bracing element (16) to the base body (10) are arranged on the radially outwardly facing circumferential surface (17) of the base body (10), wherein the first fixing element (18) is arranged opposite the second fixing element (19), wherein the first fixing element (18) and/or the second fixing element (19) are hook-shaped, or the first fixing element (18) and/or the second fixing element (19) are designed in the form of an eyelet, wherein the bracing element (16) is designed in the form of a rubber ring, that the bracing element (16) is designed in the form of a spring plate or in the form of a spring wire, or that a bracing element (16) designed as a spring wire is designed as a spiral spring.

2. Coolant conducting element (100) according to claim 1,
**characterized in that** the bracing element (16) is made of a resilient and/or elastic material.

3. Cooling system (300) for cooling an electrical machine (400), comprising
an inlet opening (60) for supplying a coolant,
an outlet opening (61) for discharging the coolant,
a cooling path (62) along which coolant emerging from the inlet opening (60) flows during a cooling process and along which the coolant flows to the outlet opening (61) during the cooling process,
wherein a coolant conducting element (100) is arranged on the cooling path (62), which coolant conducting element is designed according to either of claims 1 or 2, wherein a gap (63) is formed between the cooling path (62) and the coolant conducting element (100), through which gap the coolant flows from the inlet opening (60) to the outlet opening (61) during the cooling process.

4. Electrical machine (400) comprising a housing (50), wherein a cooling system (300) is arranged on an outer peripheral surface of the housing (50), which cooling system is designed according to claim 3.

5. Electrical machine (400) according to claim 4, wherein the electrical machine (400) is designed as an electric motor of a motor vehicle.

## Revendications

1. Élément de conduite de fluide de refroidissement (100) pour un système de refroidissement (300) permettant de refroidir une machine électrique (400),
comportant un corps de base (10) sur lequel est disposé, sur une surface périphérique (11) du corps de base (10) orientée radialement vers l'intérieur, au moins un élément de guidage (12) pour le guidage d'un fluide de refroidissement, dans lequel le corps de base (10) présente une première section d'extrémité (14) et une seconde section d'extrémité (15), dans lequel le corps de base (10) forme une forme annulaire dans un état relié de la première section d'extrémité (14) à la seconde section d'extrémité (15), et
comportant un élément de serrage (16) qui, dans un état fixé au corps de base (10), s'étend le long d'une surface périphérique (17) du corps de base (10) orientée radialement vers l'extérieur et est fixé au corps de base (10) de telle sorte que la première section d'extrémité (14) et la seconde section d'extrémité (15) sont maintenues serrées l'une contre l'autre, dans lequel l'élément de serrage (16) s'étend, à l'état fixé, sur plus d'un tiers de la surface périphérique (17) du corps de base (10) orientée radialement vers l'extérieur, dans lequel un premier élément de fixation (18) et un second élément de fixation (19) sont disposés sur la surface périphérique (17) du corps de base (10) orientée radialement vers l'extérieur pour la fixation de l'élément de serrage (16) sur le corps de base (10), dans lequel le premier élément de fixation (18) est disposé en face du second élément de fixation (19), dans lequel le premier élément de fixation (18) et/ou le second élément de fixation (19) sont réalisés en forme de crochet ou le premier élément de fixation (18) et/ou le second élément de fixation (19) sont réalisés en forme d'œillet, dans lequel l'élément de serrage (16) est réalisé sous la forme d'un anneau en caoutchouc, que l'élément de serrage (16) est réalisé sous la forme d'une tôle élastique ou sous la forme d'un fil élastique, ou qu'un élément de serrage (16) réalisé sous la forme d'un fil élastique est réalisé sous la forme d'un ressort en spirale.

2. Élément de conduite de fluide de refroidissement (100) selon la revendication 1, **caractérisé en ce que** l'élément de serrage (16) est réalisé en un matériau élastique et/ou souple.

3. Système de refroidissement (300) permettant de refroidir une machine électrique (400), comportant une ouverture d'entrée (60) pour l'amenée d'un fluide de refroidissement, une ouverture de sortie (61) pour l'évacuation du fluide de refroidissement, une voie de refroidissement (62) le long de laquelle s'écoule le fluide de refroidissement sortant de l'ouverture d'entrée (60) pendant un processus de refroidissement et le long de laquelle s'écoule le fluide de refroidissement vers l'ouverture de sortie (61) pendant le processus de refroidissement, dans lequel un élément de conduite de fluide de refroidissement (100) réalisé selon l'une des revendications 1 ou 2 est disposé sur la voie de refroidissement (62), dans lequel un interstice (63) est réalisé entre la voie de refroidissement (62) et l'élément de conduite de fluide de refroidissement (100), à travers lequel interstice le fluide de refroidissement s'écoule depuis l'ouverture d'entrée (60) jusqu'à l'ouverture de sortie (61) pendant le processus de refroidissement.

4. Machine électrique (400), comportant un boîtier (50), dans laquelle un système de refroidissement (300) réalisé selon la revendication 3 est disposé sur une surface périphérique extérieure du boîtier (50).

5. Machine électrique (400) selon la revendication 4, dans laquelle la machine électrique (400) est conçue comme un moteur électrique d'un véhicule automobile.
